# EUROPÄISCHE PATENTSCHRIFT

(11) **EP 3 609 697 B1**
(45) Veröffentlichungstag und Bekanntmachung des Hinweises auf die Patenterteilung: **12.05.2021**
(21) Anmeldenummer: 18721278.2
(22) Anmeldetag: 12.04.2018
(51) Int. Cl.: B44D 3/02, B44D 3/12, B32B 5/02

(54) **TABLETT ZUR AUFNAHME VON FARBE**
TRAY FOR HOLDING INK
PALETTE DESTINÉE À RECEVOIR DE LA PEINTURE

(30) Priorität: 12.04.2017 DE 102017107965; 10.08.2017 DE 102017118207
(43) Veröffentlichungstag der Anmeldung: 19.02.2020
(73) Patentinhaber: Well Linkage Limited, Wan Chai (HK)
(72) Erfinder: CHAN, Kit-Ching, N.T. Hong Kong (CN)
(74) Vertreter: Dr. Gassner & Partner mbB
(86) Internationale Anmeldenummer: PCT/EP2018/000194
(87) Internationale Veröffentlichungsnummer: WO 2018/188800

(56) Entgegenhaltungen:
- AU-A1- 2015 202 655
- CA-A1- 2 889 967
- DE-A1-102012 015 490
- DE-U1-202012 103 957
- FR-A3- 2 839 013
- US-A1- 2009 021 524
- US-A1- 2014 262 840

## Beschreibung

Die Erfindung betrifft ein Tablett zur Aufnahme von Farbe, mit einem Boden, wobei der Boden mit einer aus Faser gebildeten Farbhalteschicht versehen ist.

Ein solches Tablett ist aus der US 2014/0262840 A1 sowie der DE202012103957 U1 bekannt.

Beim bekannten Tablett ist die Farbhalteschicht aus einem Borstengewebe gebildet. Genaue Angaben über die Ausgestaltung des Borstengewebes sind dieser Druckschrift nicht zu entnehmen.

Bei den am Markt erhältlichen gattungsgemäßen Tabletts tritt das Problem auf, dass in der Farbhalteschicht aufgenommene Farbe entweder nicht ausreichend gehalten wird oder sich von der Farbhalteschicht nur mäßig auf ein Farbauftragwerkzeug, z. B. einen Pinsel oder eine Farbwalze, übertragen lässt.

Aufgabe der Erfindung ist es, die Nachteile nach dem Stand der Technik zu beseitigen. Es soll insbesondere ein Tablett angegeben werden, welches einerseits einen ausreichenden Halt einer in der Farbhalteschicht aufgenommen Farbe und andererseits eine verbesserte Übertragung der in der Farbhalteschicht aufgenommenen Farbe auf ein Farbauftragwerkzeug ermöglicht.

Diese Aufgabe wird durch die Merkmale des Patentanspruchs 1 gelöst. Zweckmäßige Ausgestaltungen der Erfindungen ergeben sich aus den Merkmalen der abhängigen Patentansprüche.

Nach Maßgabe der Erfindung wird vorgeschlagen, dass
die sich von einer Oberseite einer Trägerschicht erstreckenden Fasern eine Höhe von 3 bis 15 mm aufweisen,
BESTÄTIGUNGSKOPIE
eine Dichte der sich von der Trägerschicht erstreckenden Fasern 850 bis 7300 Fasern/cm² beträgt, und
eine Dicke der Fasern im Bereich von 20 bis 80 µm ist.

Die erfindungsgemäße Farbhalteschicht gewährleistet einerseits einen sehr guten Halt einer darin aufgenommenen Farbe und ermöglicht andererseits eine verbesserte Übertragbarkeit der Farbe auf ein Farbauftragwerkzeug, insbesondere eine Farbwalze. Auch wenn das Tablett, z. B. beim Steigen auf eine Leiter, zeitweise schräg gehalten wird, entweicht keine Farbe. In der Farbhalteschicht aufgenommene Farbe kann nahezu vollständig, insbesondere auf eine Farbwalze oder einen Pinsel, übertragen werden. Damit kann die Farbe besonders effizient appliziert werden.

Zweckmäßigerweise sind die Fasern aus einem Polymer, insbesondere Polyester oder Polyamid, oder Mohair, hergestellt. Solche Fasern sind besonders langlebig. Damit ist es möglich, die Farbe wiederholt mittels Lösemittel zu entfernen, ohne dass die Farbhalteschicht Schaden nimmt.

Die Fasern weisen in Erstreckungsrichtung vorteilhafterweise eine gerade Form auf. Das ermöglicht eine besonders gute Übertragbarkeit der Farbe von der Farbhalteschicht auf ein Farbauftragwerkzeug. - Die Trägerschicht ist zweckmäßigerweise aus einem Vlies, Gewirk oder einem Gewebe gebildet.

Nach einer weiteren Ausgestaltung der Erfindung ist eine der Oberseite gegenüberliegende Unterseite der Trägerschicht mit einer Halteschicht kaschiert. Die Halteschicht kann aus Gummi oder Silikonkautschuk hergestellt sein. Bei der Halteschicht kann es sich auch um eine Schwerschicht handeln. Es ist auch denkbar, die Trägerschicht an ihrer Unterseite mit einer Klettverschlussschicht zu versehen und am Boden und/oder einer sich vom Boden erstreckenden Wand eine dazu korrespondierende Klettverschlussschicht vorzusehen.

Vorteilhafterweise ist die Farbhalteschicht ein Tuftmaterial, bei dem die Trägerschicht U-, V- oder W-förmig von einem aus den Fasern gebildeten Garn durchdrungen ist. Das im Sinne der vorliegenden Erfindung verwendete Tuftmaterial wird im sogenannten Tuftingverfahren hergestellt. Jedes Garn durchdringt dabei die Trägerschicht. Das Garn ist an einer Unterseite der Trägerschicht fixiert, beispielsweise durch eine darauf aufkaschierte Halteschicht. Die beiden Enden eines jeden Garns erstrecken sich von einer der Unterseite gegenüberliegenden Oberseite der Trägerschicht. Die Enden weisen gegenüber der Oberseite im Wesentlichen die gleiche Höhe auf. Jedes derart in der Trägerschicht gehaltene Garn ist von weiteren benachbarten Garnen umgeben.

Nach einer vorteilhaften Ausgestaltung beträgt ein mittlerer Abstand zwischen zwei benachbarten Garnen 0,3 bis 2,0 mm. Damit wird insbesondere eine besonders gute Übertragbarkeit der Farbe auf ein Farbauftragswerkzeug erreicht.

Nach einer vorteilhaften Ausgestaltung erstreckt sich vom Boden des Tabletts eine umlaufende Wand. Die Wand hat zweckmäßigerweise eine Höhe im Bereich von 1 bis 4 cm.

Nach einer weiteren Ausgestaltung sind die Fasern Flockfasern. Flockfasern werden mittels elektrostatischer Beflockung in einem elektrischen Feld auf eine mit einem Klebstoff beschichtete Trägerschicht aufgebracht. Alternativ können die Flockfasern auch mit der Trägerschicht verschweißt werden. Die auf die Trägerschicht aufgebrachten Flockfasern weisen zweckmäßigerweise einen DTEX-Wert im Bereich von 5 bis 25 auf.

Die Flockfasern erstrecken sich von der auf die Trägerschicht aufgebrachten Klebstoffschicht. Bei der Trägerschicht kann es sich um ein Vlies, Gewirk oder Gewebe handeln. Die Trägerschicht kann - wie oben erwähnt - wiederum mit einer Halteschicht kaschiert sein. Die Halteschicht kann aus Gummi oder Silikonkautschuk gebildet und/oder als Schwerschicht ausgebildet sein. Es ist auch in diesem Fall möglich, die Trägerschicht mittels einer Klettverschlussschicht und einer am Boden und/oder der Wand angebrachten korrespondierenden Klettverschlussschicht zu fixieren.

Es kann aber bei einer besonders vorteilhaften Ausgestaltung auch sein, dass die Trägerschicht unmittelbar durch den Boden und/oder die Wand des Tabletts gebildet wird. Das vereinfacht und verbilligt die Herstellung des Tabletts.

Nach einer weiteren Ausgestaltung sind der Boden und ggf. die Wand Bestandteile eines Deckels für einen Farbbehälter. In diesem Fall kann das Tablett also mehrere Funktionen erfüllen, zum einen die eines Deckels für einen Farbbehälter und zum anderen als Farbhaltewerkzeug zum Aufnehmen und Übertragen von Farbe auf einen Pinsel, eine Farbwalze oder dgl.

Nachfolgend wird ein Ausführungsbeispiel der Erfindung näher erläutert. Es zeigen:
- Fig. 1: eine perspektivische Darstellung eines Tabletts mit geöffnetem Deckel,
- Fig. 2: eine Seitenansicht des Tabletts gemäß Fig. 1 mit geschlossenem Deckel,
- Fig. 3: eine Schnittansicht gemäß der Schnittlinie A-A' in Fig. 2,
- Fig. 4: eine Schnittansicht durch ein weiteres Tablett, und
- Fig. 5: eine perspektivische Ansicht eines weiteren Tabletts.

Die Figuren zeigen ein Tablett zur Aufnahme von Farbe. Das Tablett weist einen Boden 1 und eine vom Boden 1 sich erstreckende umlaufende Wand 2 auf. Der Boden 1 ist im Wesentlichen eben ausgebildet. Die Wand 2 kann auch weggelassen werden. In diesem Fall muss der Boden 1 nicht unbedingt eben ausgeführt sein. Der Boden 1 kann auch konkav oder konvex gekrümmt oder auch flach sein. Die Wand 2 kann auch als umlaufender Wulst oder dgl. ausgeführt sein.

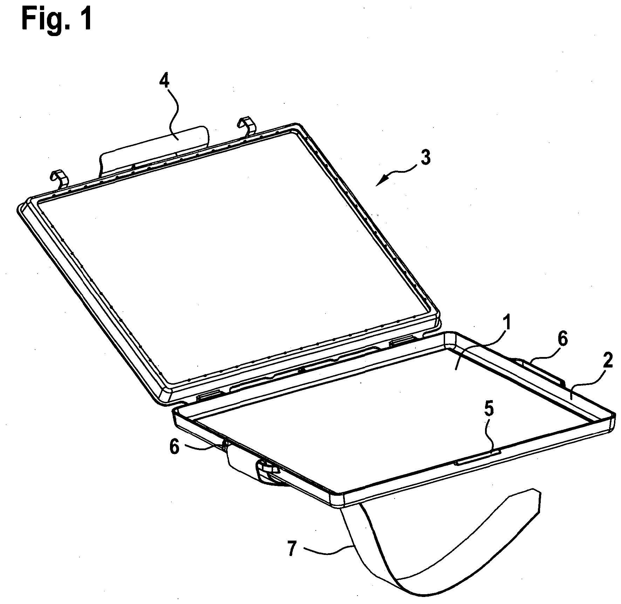

Das in den Fig. 1 bis 3 gezeigte Tablett hat eine im Wesentlichen rechteckige Form mit zwei kurzen und zwei langen Wänden. An einer der langen Wände ist schwenkbar ein allgemein mit dem Bezugszeichen 3 bezeichneter Deckel angebracht. Am Deckel 3 ist eine mit dem Bezugszeichen 4 bezeichnete Rastlasche angebracht. Das Tablett weist an der anderen der langen Wände eine zur Rastlasche 4 korrespondierende Rastnase 5 auf. Zumindest an einer der kurzen Wände ist an der Außenseite eine Haltelasche 6 angespritzt, an welcher ein Halter 7 angebracht ist. - Vorteilhafterweise ist an den einander gegenüberliegenden Außenseiten der beiden kurzen Wände jeweils eine Haltelasche 6 angebracht. Damit ist es möglich, den Halter 7 entweder an der einen oder der anderen kurzen Wand anzubringen.

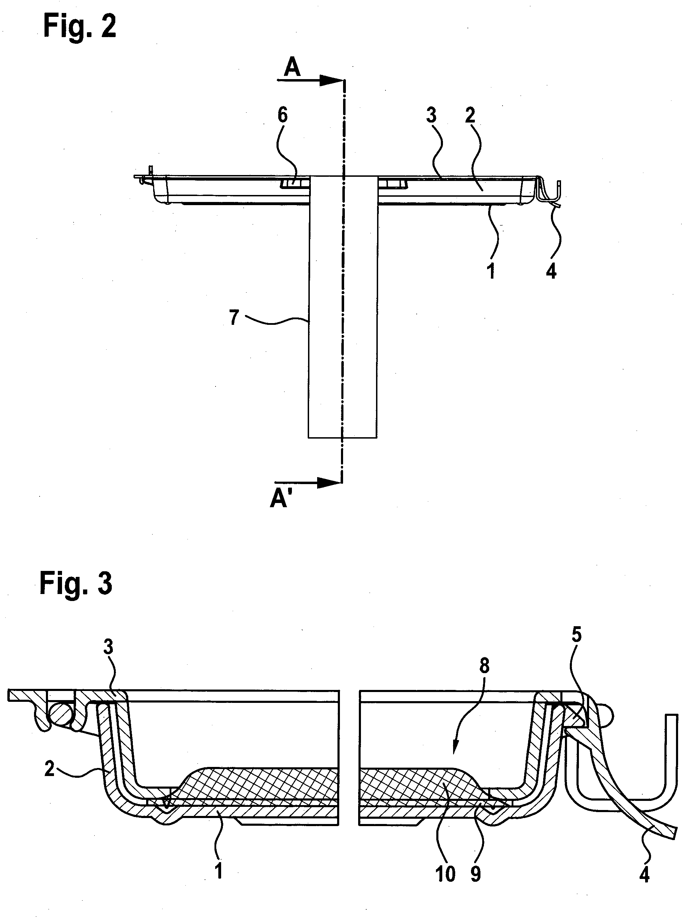

Wie insbesondere aus Fig. 3 ersichtlich ist, ist auf dem Boden 1 eine allgemein mit dem Bezugszeichen 8 bezeichnete Farbhalteschicht abgestützt. Die Farbhalteschicht 8 weist eine Trägerschicht 9 auf, von der sich Garne 10 in eine vom Boden 1 weg weisende Richtung zu einem von den Wänden 2 umgebenden Innenraum des Tabletts erstrecken. Die Trägerschicht 9 kann aus einem Polymervlies, beispielsweise einem Polyamid- oder Polyestervlies, gebildet sein. Bei der Farbhalteschicht 8 handelt es sich um ein Tuftmaterial, bei dem die Trägerschicht 9 z. B. U-förmig von den Garnen 10 durchdrungen ist. Die Farbhalteschicht 8 kann auch aus einer Trägerschicht 9 gebildet sein, auf der mittels einer Klebstoffschicht Flockfasern angebracht sind (hier nicht gezeigt).

Die Garne 10 weisen vorteilhafterweise 30 bis 100 Fasern auf. Die Fasern weisen zweckmäßigerweise eine gerade Form und einen Durchmesser im Bereich von 20 bis 70 µm, vorzugsweise 40 bis 60 µm, auf.

Als vorteilhaft hat sich zur Herstellung der Farbhalteschicht ein Tuftmaterial erwiesen, bei dem die Fasern des Garns einen Durchmesser im Bereich von 40 bis 60 µm und eine Länge im Bereich von 4 bis 5 mm aufweisen. Eine Dichte der Fasern hat in diesem Fall 1100 bis 1400 Fasern/cm² betragen. Der DTEX-Wert der aus Polyamid hergestellten Fasern hat 20-24, vorzugsweise 22, betragen.

Als besonders vorteilhaft zur Herstellung der Farbhalteschicht haben sich Flockfasern erwiesen. Insbesondere Flockfasern mit einem Durchmesser der Fasern von 30 bis 100 µm, insbesondere 70 bis 90 µm, eine Faserdichte im Bereich von 800 bis 1400 Fasern/cm², insbesondere 850 bis 1300 Fasern/cm², und einer Höhe der Fasern im Bereich von 4 bis 8 mm, insbesondere 5 bis 7 mm, weisen eine hervorragende Farbhaltefähigkeit auf.

Eine aus Flockfasern gebildete Farbhalteschicht weist zweckmäßigerweise eine Dichte der sich von der Trägerschicht erstreckenden Fasern im Bereich von 500 bis 2000 Fasern/cm² auf.

Die nachfolgende Tabelle gibt weitere Beispiele geeigneter Garne und Fasern zur Herstellung der Farbhalteschicht wieder:

| Zusammensetzung/Garn | Form der Faser | Anzahl der Fasern im Garn | DTEX der Faser | Ø der Faser in µm | Garne pro cm² | Fasern pro cm² | Höhe der Fasern in mm |
|---|---|---|---|---|---|---|---|
| Polyester/Garn | gerade | 60 | 22 | 45 | 63,4 | 3804 | 12,0 |
| Polyamid/Garn | gerade | 40 | 18,33 | 45 | 96 | 3840 | 4,0 |
| Mohairwolle/Garn | gerade | 90 | ./. | 30 | 78 | 7020 | 6,0 |
| Polyamid/Flockfaser | gerade | ./. | 22 | 50 | ./. | 1250 | 4,5 |
| Polyamid/Flockfaser | gerade | ./. | 40 | 60 | ./. | 2750 | 5,0 |
| Polyamid/Flockfaser | gerade | ./. | 57 | 80 | ./. | 890 | 7,0 |

Ein Tablett mit der erfindungsgemäß vorgeschlagenen Farbhalteschicht 8 zeichnet sich durch ein hohes Farbaufnahmevermögen aus. Die Farbe wird gut in der Farbhalteschicht 8 gehalten. Sie lässt sich gleichwohl nahezu vollständig von der Farbhalteschicht 8 auf ein Farbauftragwerkzeug übertragen. Durch das Schließen des Deckels 3 kann vermieden werden, dass in der Farbhalteschicht 8 aufgenommene Farbe austrocknet. Das vorgeschlagene Tablett ermöglicht die Übertragung einer geeigneten Menge an Farbe auf ein Farbauftragwerkzeug, so dass ein Tropfen von Farbe vom Farbauftragwerkzeug vermieden wird.

Das vorzugsweise aus einem spritzgegossenem Kunststoff hergestellte Tablett lässt sich einfach und kostengünstig herstellen. Obwohl es in der Zeichnung nicht gezeigt ist, kann an einer der dem Boden 1 zugewandten Unterseite der Trägerschicht 9 eine Halteschicht aufkaschiert sein, welche beispielsweise aus Gummi oder Silikonkautschuk hergestellt ist. Eine solche Halteschicht ermöglicht eine haftende Befestigung der Farbhalteschicht 8 auf dem Boden 1.

Obwohl es in den Figuren nicht gezeigt ist, kann es auch sein, dass die Farbhalteschicht 8 im Tablett mit einem gegen die Innenseite der Wände verrasteten Rahmen klemmend gehalten wird. Zur klemmenden Halterung der Farbhalteschicht 8 kann auch der Deckel 3 in seiner der Verschlussrichtung zugewandten Seite nach Art eines vorspringenden Halterahmens gebildet sind, mit dem im geschlossenen Zustand die Farbhalteschicht 8 klemmend gehalten wird. Es wird dazu auf die Fig. 3 verwiesen, aus der eine entsprechende klemmende Halterung der Farbhalteschicht 9 bei geschlossenem Deckel 3 ersichtlich ist.

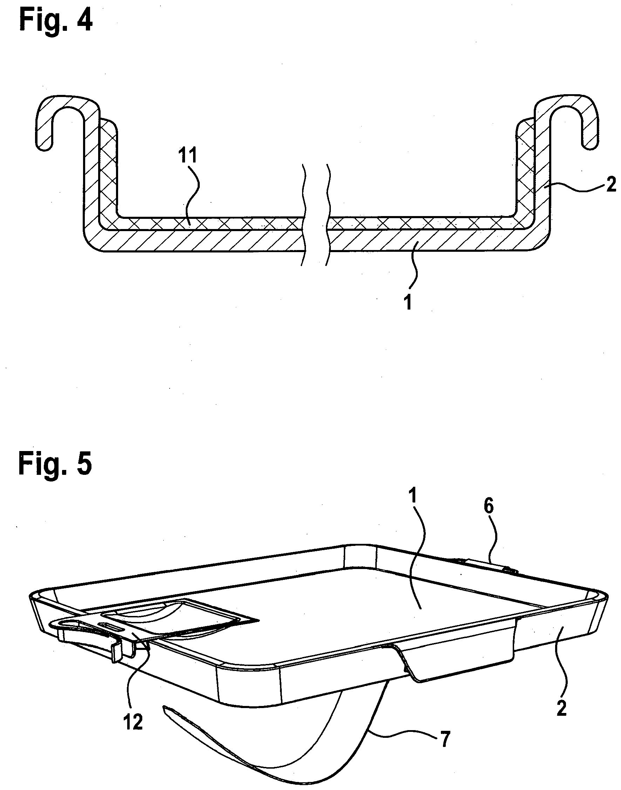

Fig. 4 zeigt eine weitere Ausgestaltung des Tabletts. Dabei ist eine aus Flockfasern gebildete Flockfaserschicht 11 mittels einer (hier nicht gezeigten) Klebstoffschicht unmittelbar an der zum Innenraum des Tabletts weisenden Oberseite sowie den zum Innenraum des Tabletts weisenden Innenseite der umlaufenden Wand 2 angebracht. Das in Fig. 4 gezeigte Tablett ist vorzugsweise oval oder rund ausgebildet. Die Wände können an ihren Oberkanten eine nach außen weisende Umbiegung aufweisen, welche zu einem Öffnungsrand eines (hier nicht gezeigten) Farbbehälters korrespondiert, so dass das Tablett nach Art eines weiteren Deckels zum Verschluss des Behälters verwendet werden kann.

Fig. 5 zeigt eine perspektivische Ansicht eines weiteren Tabletts. Bei dem weiteren Tablett ist lösbar an der Haltelasche 6 eine Schale 12 zur Aufnahme eines Farbauftragwerkzeugs, beispielsweise einer Farbwalze, befestigt. Die Schale kann mit der Haltelasche 6 verrastet oder in der Haltelasche 6 formschlüssig gehalten sein.

Obwohl es in den Fig. 4 und 5 nicht gezeigt ist, können auch diese weiteren Tabletts - ähnlich wie in Fig. 1 - mit einem Deckel versehen sein, welcher ein Austrocknen einer in der Farbhalteschicht aufgenommenen Farbe verhindert.

### Bezugszeichenliste

- 1: Boden
- 2: umlaufende Wand
- 3: Deckel
- 4: Rastlasche
- 5: Rastnase
- 6: Haltelasche
- 7: Halter
- 8: Farbhalteschicht
- 9: Trägerschicht
- 10: Garn
- 11: Flockfaserschicht
- 12: Schale

## Patentansprüche

1. Tablett zur Aufnahme von Farbe mit einem Boden (1), wobei der Boden (1) mit einer aus Fasern gebildeten Farbhalteschicht (8) versehen ist,
**dadurch gekennzeichnet, dass**
die sich von einer Oberseite einer Trägerschicht (9) erstreckenden Fasern eine Höhe von 3 bis 15 mm aufweisen,
eine Dichte der sich von der Trägerschicht (9) erstreckenden Fasern 850 bis 7300 Fasern/cm² beträgt, und
eine Dicke der Fasern im Bereich von 20 bis 80 µm ist.

2. Tablett nach Anspruch 1, wobei die Fasern aus einem Polymer, vorzugsweise Polyamid oder Polyester, oder Mohair hergestellt sind.

3. Tablett nach einem der vorhergehenden Ansprüche, wobei die Fasern in Erstreckungsrichtung eine gerade Form aufweisen.

4. Tablett nach einem der vorhergehenden Ansprüche, wobei die Trägerschicht (9) aus einem Vlies, Gewirk oder einem Gewebe gebildet ist.

5. Tablett nach einem der vorhergehenden Ansprüche, wobei eine der Oberseite gegenüberliegende Unterseite der Trägerschicht (9) mit einer Halteschicht kaschiert ist.

6. Tablett nach Anspruch 5, wobei die Halteschicht aus Gummi oder Silikonkautschuk gebildet und/oder als Schwerschicht ausgebildet ist.

7. Tablett nach einem der vorhergehenden Ansprüche, wobei die Farbhalteschicht (8) ein Tuftmaterial ist, bei dem die Trägerschicht (9) U-, V- oder W-förmig von einem aus den Fasern gebildeten Garn (10) durchdrungen ist.

8. Tablett nach einem der vorhergehenden Ansprüche, wobei eine Dichte der sich von der Trägerschicht (9) erstreckenden Garne (10) 50 bis 100 Garne/cm² beträgt.

9. Tablett nach einem der vorhergehenden Ansprüche, wobei das Garn (10) 30 bis 100 Fasern aufweist.

10. Tablett nach einem der vorhergehenden Ansprüche, wobei ein mittlerer Abstand zwischen zwei benachbarten Garnen (10) 0,3 bis 2,0 mm beträgt.

11. Tablett nach einem der vorhergehenden Ansprüche, wobei sich vom Boden (1) eine umlaufende Wand (2) erstreckt.

12. Tablett nach einem der Ansprüche 1 bis 6, wobei die Fasern Flockfasern sind.

13. Tablett nach Anspruch 12, wobei sich die Flockfasern von einer auf die Trägerschicht (9) aufgebrachten Klebstoffschicht erstrecken.

14. Tablett nach Anspruch 12 oder 13, wobei die Trägerschicht (9) durch den Boden (1) und/oder die Wand gebildet ist.

15. Tablett nach einem der vorhergehenden Ansprüche, wobei der Boden (1) und die Wand Bestandteile eines Deckels für einen Farbbehälter sind.

## Claims

1. A tray for holding paint having a bottom (1), wherein the bottom (1) is provided with a paint holding layer (8) formed of fibers,
**characterized in that**
the fibers extending from an upper layer of the support layer (9) have a height of 3 to 15 mm,
a density of the fibers extending from the support layer (9) is 850 to 7300 fibers/cm², and
a thickness of the fibers is in the range of 20 to 80 µm.

2. Tray according to claim 1, wherein the fibers are made of a polymer, preferably polyamide or polyester, or mohair.

3. Tray according to any one of the preceding claims, wherein the fibers have a straight shape in the direction of extension.

4. Tray according to any one of the preceding claims, wherein the support layer (9) is formed of a nonwoven, knitted or woven fabric.

5. Tray according to any one of the preceding claims, wherein an underside of the support layer (9) opposite the upper side is laminated with a retaining layer.

6. Tray according to claim 5, wherein the retaining layer is formed of rubber or silicone rubber and/or is designed as a heavy layer.

7. Tray according to any one of the preceding claims, wherein the color retaining layer (8) is a tufted material in which the support layer (9) is penetrated in a U-, V- or W-shape by a yarn (10) formed by the fibers.

8. Tray according to any one of the preceding claims, wherein a density of the yarns (10) extending from the support layer (9) is 50 to 100 yarns/cm².

9. Tray according to any one of the preceding claims, wherein the yarn (10) comprises 30 to 100 fibers.

10. Tray according to any one of the preceding claims, wherein an average distance between two adjacent yarns (10) is 0,3 to 2,0 mm.

11. Tray according to any one of the preceding claims, wherein a circumferential wall (2) extends from the bottom (1).

12. Tray according to any one of claims 1 to 6, wherein the fibers are flock fibers.

13. Tray according to claim 12, wherein the flock fibers extend from an adhesive layer applied to the support layer (9).

14. Tray according to claim 12 or 13, wherein the support layer (9) is formed by the bottom (1) and/or the wall.

15. Tray according to any one of the preceding claims, wherein the bottom (1) and the wall are components of a lid for a paint container.

## Revendications

1. Palette destinée à recevoir de la peinture comprenant un fond (1), en ce que le fond (1) est pourvu d'une couche de retenue de peinture (8) formée de fibres,
**caractérisée en ce que**
les fibres s'étendant depuis une face supérieure d'une couche de support (9) ont une hauteur de 3 à 15 mm,
une densité des fibres s'étendant depuis la couche de support (9) est de 850 à 7300 fibres/cm², et
une épaisseur des fibres est dans une plage comprise entre 20 et 80 µm.

2. Palette selon la revendication 1, en ce que les fibres sont réalisées en un polymère, de préférence en polyamide ou polyester, ou en mohair.

3. Palette selon l'une des revendications précédentes, en ce que les fibres présentent une forme droite dans le sens d'extension.

4. Palette selon l'une des revendications précédentes, en ce que la couche de support (9) est composée d'un voile, d'un tissu maille ou d'un tissu.

5. Palette selon l'une des revendications précédentes, en ce qu'une face inférieure de la couche de support (9) opposée à la face supérieure est doublée avec une couche de retenue.

6. Palette selon la revendication 5, en ce que la couche de retenue est composée de caoutchouc ou de caoutchouc de silicone et/ou réalisée sous forme de couche lourde.

7. Palette selon l'une des revendications précédentes, en ce que la couche de retenue de peinture (8) est un matériau tufté, dans lequel la couche de support (9) est pénétrée en forme de U, de V ou de W par un fil (10) formé à partir des fibres.

8. Palette selon l'une des revendications précédentes, en ce qu'une densité des fils (10) s'étendant depuis la couche de support (9) est de 50 à 100 fils/cm².

9. Palette selon l'une des revendications précédentes, en ce que le fil (10) comporte 30 à 100 fibres.

10. Palette selon l'une des revendications précédentes, en ce qu'un écartement moyen entre deux fils adjacents (10) est de 0,3 à 2,0 mm.

11. Palette selon l'une des revendications précédentes, en ce qu'une paroi périphérique (2) s'étend depuis le fond (1).

12. Palette selon l'une des revendications 1 à 6, en ce que les fibres sont des flocs.

13. Palette selon la revendication 12, en ce que les flocs s'étendent depuis la couche de colle appliquée sur la couche de support (9).

14. Palette selon la revendication 12 ou 13, en ce que la couche de support (9) est formée par le fond (1) et/ou la paroi.

15. Palette selon l'une des revendications précédentes, en ce que le fond (1) et la paroi sont des composants d'un couvercle pour un pot de peinture.
